# EUROPEAN PATENT SPECIFICATION

(11) **EP 3 012 067 B1**
(45) Date of publication and mention of the grant of the patent: **03.05.2023**
(21) Application number: 15167045.2
(22) Date of filing: 08.05.2015
(51) Int. Cl.: B24B 21/04, B24B 21/18, B24B 33/055, B24B 33/10, B24B 35/00, B24B 27/00, B23Q 1/25, B23Q 11/00, B24B 41/00, B24B 41/04, B24B 49/12, B24B 7/06, B24B 9/00, B08B 5/02, B23Q 17/00

(54) **PLANT FOR SANDING/FINISHING PANELS MADE OF WOOD, METAL OR THE LIKE**
ANLAGE ZUM SCHLEIFEN/ENDBEARBEITEN VON PLATTEN AUS HOLZ, METALL ODER DERGLEICHEN
INSTALLATION DE SABLAGE/FINITION DE PANNEAUX EN BOIS, EN MÉTAL OU ANALOGUE

(30) Priority: 22.10.2014 IT BO20140581
(43) Date of publication of application: 27.04.2016
(73) Proprietor: BIESSE S.p.A., 61122 Pesaro (PU) (IT)
(72) Inventor: Venturini, Marco, 47890 Murata (SM)
(74) Representative: Manconi, Stefano

(56) References cited:
- EP-A1- 2 039 465
- EP-A2- 0 441 075
- WO-A1-03/018255
- DE-A1- 4 344 264
- DE-A1- 19 734 628
- DE-A1- 19 734 631
- US-A- 4 504 824
- US-A- 6 159 086
- US-A1- 2005 181 707
- US-A1- 2006 025 890
- US-A1- 2011 151 754
- US-A1- 2013 273 818

## Description

The present invention relates to a plant for sanding/finishing components made of wood, metal or the like.

In the field of sanding/finishing components made of wood, metal or the like, it is known to provide a sanding machine of the type comprising a sanding station; a feeding device, which defines a support surface for at least one component, and is configured to feed the component through the sanding station; and a sanding device fitted in the sanding station above the support surface.

The sanding device comprises an abrasive belt loop wound around a plurality of idler rollers for sanding an upper face of the component.

EP 0 441 075 A2 discloses a plant for sanding components according to the preamble of claim 1.

When the components have a non-flat, contoured shape, the components are unloaded at the sanding station outlet by the feeding device and are sanded manually by operators at least at the areas to which the mentioned sanding device is not capable of accessing.

Known plants for sanding/finishing components made of wood, metal or the like of the type described above therefore have certain drawbacks mainly due to the fact that sanding the components requires intervention by specialized operators and therefore involves relative lengthy and costly production cycles.

EP 2 039 465 discloses a sanding tool with a pneumatic shock absorber for sanding panels with irregular surfaces.

It is the object of the present invention to provide a plant for sanding/finishing components made of wood, metal or the like, which is exempt from the above-described drawbacks and is simple and cost-effective to implement.

According to the present invention, there is provided a plant for sanding/finishing components made of wood, metal or the like, as claimed in the accompanying claims.

The present invention will now be described with reference to the accompanying drawings, which show a non-limiting embodiment thereof, in which:
figure 1 is a perspective diagrammatic view, with parts removed for clarity, of a preferred embodiment of the sanding plant of the present invention;
figure 2 is a perspective diagrammatic view of a first detail of the plant in figure 1;
figure 3 is a longitudinal diagrammatic section of **the detail in** **figure 2****;**
figure 4 is a diagrammatic perspective view of a variant of the detail in figure 2;
figures 5 and 6 show two operating modes of the detail in figure 4;
figure 7 is a diagrammatic perspective view, with parts removed for clarity, of a second detail of the plant in figure 1;
figure 8 is a diagrammatic perspective view, with parts removed for clarity, of a third detail of the plant in figure 1; and
figure 9 is a diagrammatic perspective view, with parts removed for clarity, of a variant of the detail in figure 4.

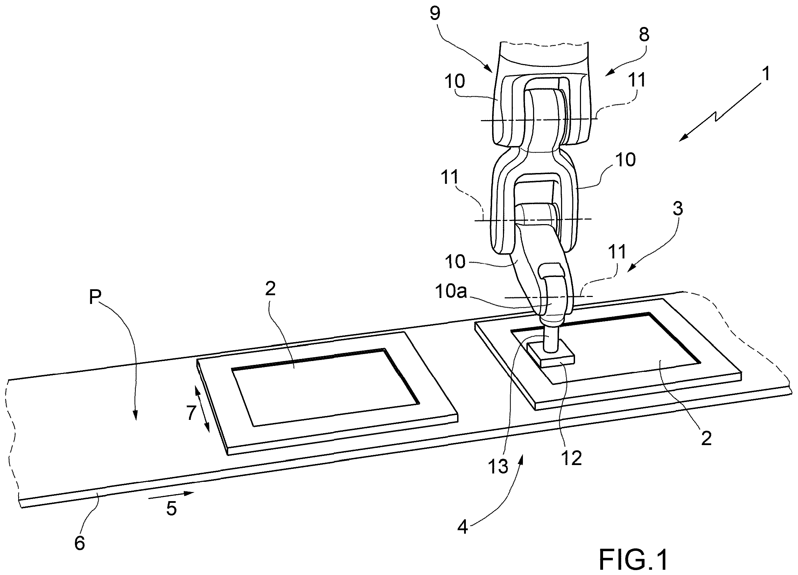

With reference to figure 1, numeral 1 indicates, as a whole, a plant for sanding/finishing shaped components 2 made of wood, metal or the like which are substantially parallelepiped in shape.

Obviously, the components 2 can have different shapes than the parallelepiped one and can comprise parts to be processed arranged at different heights from each other.

Plant 1 comprises a sanding station 3 and a feeding device 4 for feeding the components 2 in succession through station 3 in a horizontal direction 5.

Device 4 comprises a conveyor belt 6, which has an upper conveyor branch defining a horizontal support surface P for the components 2, and is wound in a loop around a pair of motor-driven pulleys (not shown) fitted to rotate in continuous manner around respective longitudinal axes (not shown), which are parallel to each other and to a horizontal direction 7 which is transverse to direction 5.

Plant 1 is also provided with a sanding unit 8 fitted at station 3 for sanding the components 2.

Unit 8 has a robotic manipulator 9 comprising a plurality of articulated arms 10 fitted to rotate, with respect to each other, around respective rotation axes 11.

Manipulator 9 also comprises a sanding tool 12 attached to the end articulated arm 10 (hereinafter indicated by 10a).

The arms 10 are motor-driven so as to allow tool 12 to carry out the sanding of component 2 in a continuous manner by combining the movements of device 4 with the movements of the arms 10.

In other words, by combining the movements of the components 2 in direction 5, the movements of the arms 10 around the relative axes 11, and any movement of manipulator 9 in direction 5, the components 2 are sanded in a continuous manner, that is to say without stopping the components 2 in station 3.

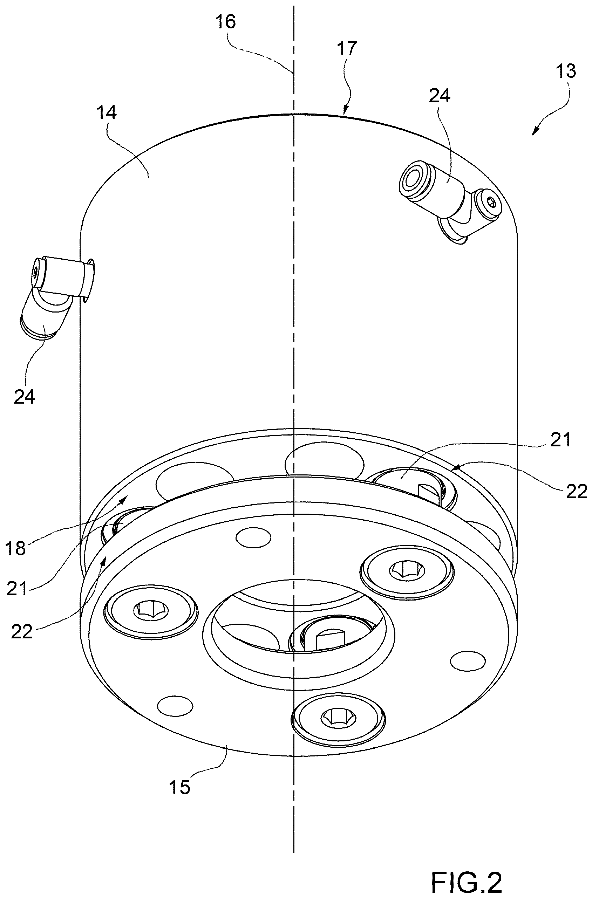

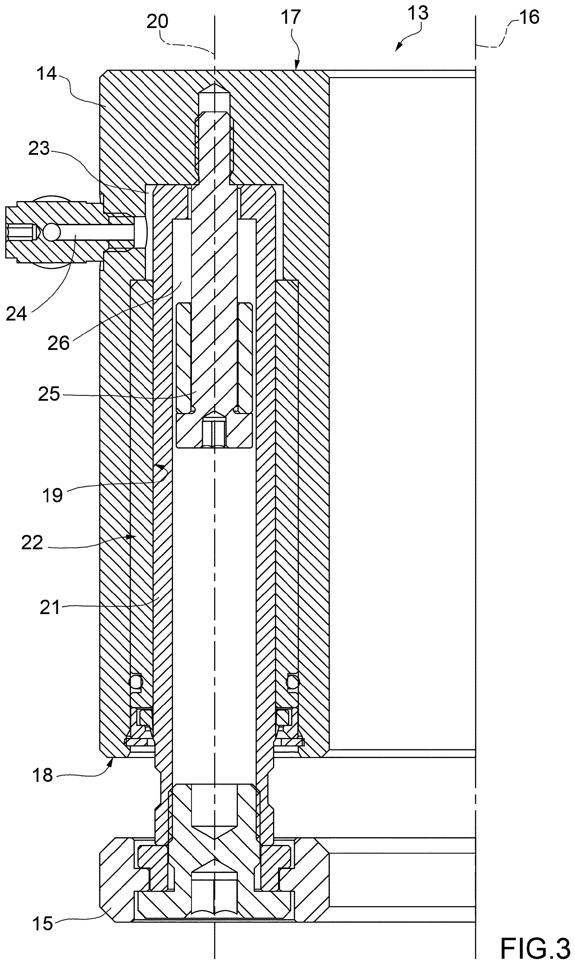

As shown in **figures 2** **and** **3****,** tool 12 is attached to arm 10a by means of the interposition of a shock absorber device 13 comprising a block 14 for fastening device 13 to arm 10a and a plate 15 for fastening device 13 to tool 12.

Block 14 is substantially cylindrical in shape, has a longitudinal axis 16 perpendicular to plate 15, and is delimited axially by two end faces 17, 18 parallel to one another and perpendicular to axis 16, and of which face 17 is fastened to arm 10a.

There are obtained inside block 14, a plurality of cylinders 19 (in the case in point, three cylinders 19), which are evenly distributed around axis 16, have respective longitudinal axes 20 parallel to axis 16 and open outward at face 18.

Each cylinder 19 is engaged in a sliding manner by an output rod 21, which protrudes downward from face 18 parallel to the relative axis 20, has a free end fastened to plate 15 and defines, together with cylinder 19, a pneumatic damper cylinder 22.

Each rod 21 delimits, inside the relative cylinder 19, a relative variable volume chamber 23 connected with a compressed air pneumatic device (known and not shown) by means of a pneumatic connection 24.

The axial movement of each output rod 21 along the relative axis 20 is delimited, on one side, by a bottom wall of the relative cylinder 19 and, on the other side, by a T-shaped limit stop element 25, which is fitted inside cylinder 19 coaxially to axis 20, and is engaged by rod 21 in a sliding manner.

In use, feeding compressed air into the chambers 23 of the three pneumatic shock absorber cylinders 22 allows tool 12 to properly follow the profile of the components 2 also when the profile of the components 2 is not flat, and to carry out the sanding of the components 2 in a continuous manner.

According to a variant not shown, each rod 21 is locked in a raised resting position by feeding compressed air into an annular variable volume chamber 26 defined between element 25 and rod 21.

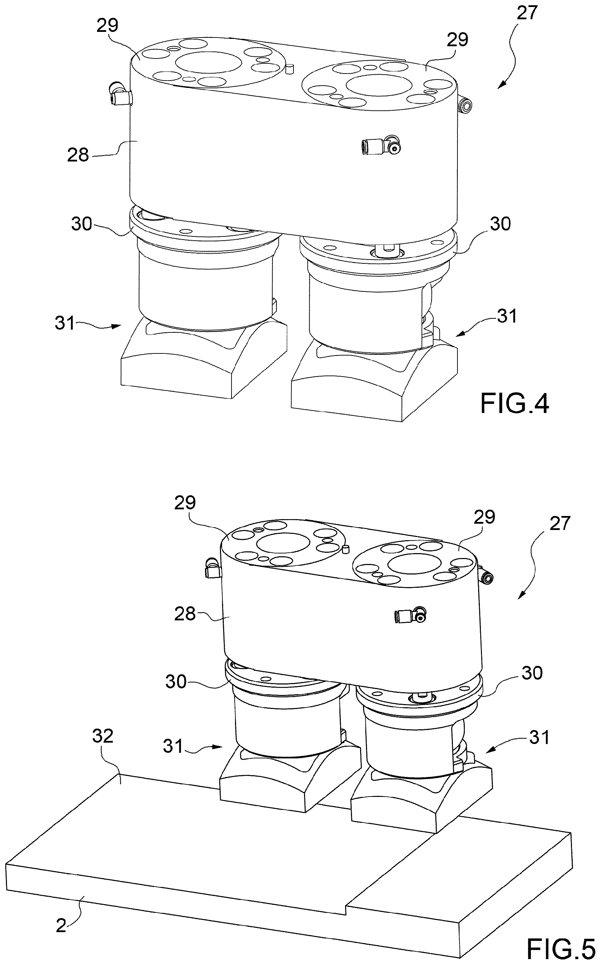

The variant shown in figure 4 differs from what illustrated in the preceding figures only in that, in it, tool 12 and the shock absorber device 13 are eliminated and replaced with a tool assembly 27 comprising a block 28 for fastening assembly 27 to arm 10a.

Block 28 is configured to accommodate therein a pair of shock absorber devices 29, which are entirely similar to device 13, and are provided with respective fastening plates 30, which are entirely similar to plate 15, and allow respective tools 31 to be fastened to the devices 29.

The tool assembly 27 has some different operating modes.

According to a first operating mode, the tools 31 are moved selectively in their raised resting positions so as to carry out the processing of the components 2 with a single tool 31 at a time.

According to a further operating mode (figure 5), the tools 31 simultaneously carry out the processing of a shaped face 32 of component 2 by following the profile of face 32 in succession.

According to a third operating mode (figure 5), the tools 31 simultaneously carry out the processing of flat portions of face 32 which are not coplanar to one another.

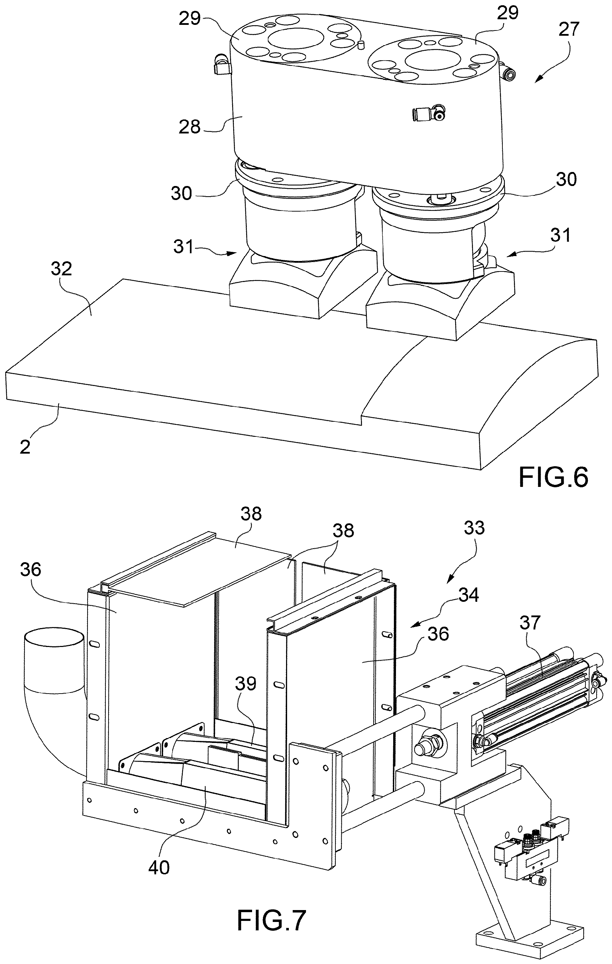

According to a fourth operating mode (figure 6), the tools 31 carry out the processing of curvilinear portions of face 32 by combining the movements of manipulator 9 with the rotations of the arms 10 around the relative axes 11 and with the oscillations of the tools 31 with respect to the relative plates 30.

As shown in figure 7, plant 1 also has an apparatus 33 for cleaning the tools 12, 31.

Apparatus 33 comprises a boxed body 34 delimited by a substantially horizontal bottom wall parallel to plane P, and by two lateral walls 36 which are parallel to one another and protrude upward from wall perpendicular to plane P.

Body 34 is moved in one of the directions 5, 7 between a resting position and an operating position, by an actuator cylinder 37 fitted parallel to direction 5, 7.

The walls 36 support a plurality of flexible, substantially flat bristles 38 arranged partly horizontal and partly vertical to allow the passage of the tools 12, 31 through body 34.

Apparatus 33 also comprises a first pneumatic collector 39, which extends between the walls 36, and is connected with a compressed air pneumatic device (known and not shown) for cleaning the tools 12, 31 from processing dust; and a second pneumatic collector 40, which extends between the walls 36, and is connected with a sucking pneumatic device (known and not shown) for sucking the processing dust generated by the action of collector 39.

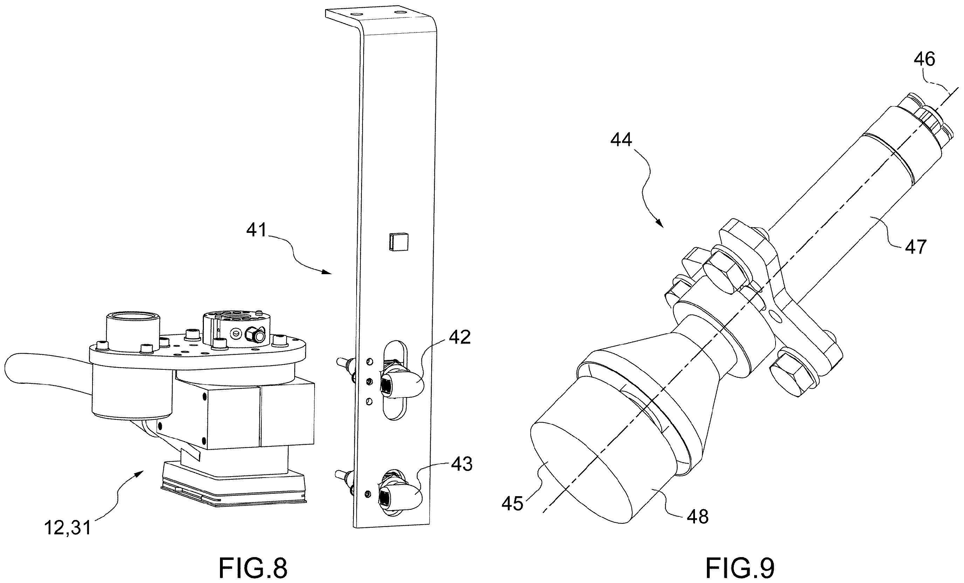

With reference to figure 8, plant 1 also has an apparatus 41 for verifying the presence and height of the tools 12, 31.

Apparatus 41 comprises two sensors 42, 43 arranged one above the other, and of which the upper sensor 42 detects the presence of tool 12, 31 and the lower sensor 43 allows the height of tool 12, 31 to be calculated by detecting the position of the lower plane of tool 12, 31.

Figure 9 shows a tool assembly 44 not according to the invention, which is normally alternative to the tool assembly 27, and is fastened to arm 10a.

Unit 44 comprises a cylindrical-shaped tool 45, which is fitted to rotate around a longitudinal axis 46 thereof under the thrust of an actuator 47 of pneumatic or electrical type, and carries out the processing of the components 2 with a lateral surface 48 thereof which is substantially coaxial to axis 46.

Obviously, according to certain variants not illustrated, plant 1 can have at least two robotic manipulators 9 arranged on the same side or on opposite sides of the conveyor belt 6 to process different components 2 and/or to process the same component 2 simultaneously or in succession.

## Claims

1. A plant for sanding/finishing components (2) made of wood, metal or the like comprising a sanding station (3); a feeding device (4) to feed at least one component (2) through the sanding station (3) in a continuous manner; and a robotic manipulator (9), which is provided with at least one sanding tool (12; 31) and is configured so as to allow the sanding tool (12; 31) to carry out the sanding of the component (2) in a continuous manner combining the movements of the feeding device (4) with the movements of the robotic manipulator (9); and **characterized in that** the robotic manipulator (9) comprises a plurality of articulated arms (10), which are motor-driven so as to rotate relative to one another around respective rotation axes (11), and at least one shock absorber device (13; 29), which is interposed between the end articulated arm (10a) and the sanding tool (12; 31); wherein the shock absorber device (13; 29) comprises at least one pneumatic shock absorber cylinder (22) comprising, in turn, a cylinder (19), which is fixed to the end articulated arm (10a), and an output rod (21), which is fixed to the sanding tool (12; 31), is engaged in a sliding manner in the cylinder (19), and is configured so as to define, inside the cylinder (19) itself, a first variable volume chamber (23), which is connected to a pneumatic device supplying a gas under pressure; and wherein the axial movement of the output rod (21) along the cylinder (19) is delimited, on one side, by a bottom wall of the cylinder (19) and, on the other side, by a limit stop element (25) fitted inside the cylinder (19); a locking device (26) being provided for locking the output rod (21), and therefore the sanding tool (12; 31), in a resting position, wherein the locking device (26) comprises a second variable volume chamber (26), which is defined between the output rod (21) and the limit stop element (25), and is connected to a pneumatic device supplying a gas under pressure.

2. A plant according to claim 1, wherein the robotic manipulator (9) is mobile in a feeding direction (5) that is parallel to a feeding direction (5) of the feeding device (4).

3. A plant according to any of the previous claims, wherein the robotic manipulator (9) is provided with at least two sanding tools (31) connected with the robotic manipulator (9) by means of the interposition of respective shock absorber devices (29).

4. A plant according to claim 3, wherein the robotic manipulator (9) comprises, for each sanding tool (31), a respective locking device (26) for locking the sanding tool (31) in a resting position.

5. A plant according to any of the previous claims and further comprising a cleaning apparatus (33) for cleaning the sanding tools (12; 31); the cleaning apparatus (33) in turn comprising a housing chamber (34, 38) configured to receive the sanding tool (12; 31) and connected with a compressed air pneumatic circuit (39) for cleaning the sanding tools (12; 31) from processing dust, and with a sucking pneumatic circuit (40) for sucking the processing dust generated by the action of the compressed air pneumatic circuit (39).

6. A plant according to any of the previous claims and further comprising a control apparatus (41) for detecting the presence of the sanding tool (12; 31) on the robotic manipulator (9) and/or the height of the sanding tool (12; 31).

7. A plant according to any of the previous claims and further comprising at least two robotic manipulators (9) arranged at a same side and/or on opposite sides of the feeding device (4).

## Patentansprüche

1. Anlage zum Schleifen/Bearbeiten von Bauteilen aus Holz, Metall oder dergleichen, umfassend eine Schleifstation (3);
eine Zuführeinrichtung (4), um zumindest ein Bauteil durch die Schleifstation (3) auf kontinuierliche Art und Weise zu fördern; und
einen Roboter-Manipulator (9), welcher mit zumindest einem Schleifwerkzeug (12, 31) ausgestattet ist und dazu eingerichtet ist es dem Schleifwerkzeug (12, 31) zu ermöglichen das Schleifen des Bauteils (2) in einer kontinuierlichen Art und Weise durchzuführen, kombinierend die Bewegungen der Zuführeinrichtung (4) mit den Bewegungen des Roboter-Manipulators (9); und
**dadurch gekennzeichnet, dass**
der Roboter-Manipulator (9) eine Vielzahl an Gelenkarmen (10) welche motorisch angetrieben sind, um relativ zueinander um respektive Rotationsachsen (11) zu rotieren, und zumindest eine Stoßdämpfungseinrichtung (13, 29) umfasst, welche zwischen dem Endgelenkarm (10a) und dem Schleifwerkzeug (12, 31) angeordnet ist, wobei
die Stoßdämpfungseinrichtung (13, 29) zumindest einen pneumatischen Stoßdämpfungszylinder (22) umfasst, wiederum aufweisend einen Zylinder (19), welcher am Endgelenkarm (10a) befestigt ist, und eine Auswurfstange (21), welche am Schleifwerkzeug (12, 31) befestigt ist, mit dem Zylinder (19) gleitend in Eingriff steht und dazu eingerichtet ist innerhalb des Zylinders (19) selbst eine erste Variable-Volumen-Kammer (23) zu definieren, welche an eine ein unter Druck stehendes Gas bereitstellende pneumatische Einrichtung angeschlossen ist, und wobei
die axiale Beweglichkeit der Auswurfstange (21) entlang des Zylinders (19) an einer Seite durch eine Bodenwandung des Zylinders (19), und, auf der anderen Seite, durch ein in den Zylinder (19) eingelassenes Endanschlagselement (25) begrenzt ist,
eine Verriegelungseinrichtung (26) zum Arretieren der Auswurfstange (21) und damit des Schleifwerkzeugs (12, 31) in einer Ruhestellung ist bereitgestellt, wobei die Verriegelungseinrichtung (26) eine zweite Variable-Volumen-Kammer (26) umfasst, welche zwischen der Auswurfstange (21) und dem Endanschlagelement (25) definiert ist, und an eine ein unter Druck stehendes Gas bereitstellende pneumatische Einrichtung angeschlossen ist.

2. Anlage nach Anspruch 1, wobei der Roboter-Manipulator (9) in eine Zuführrichtung (5) beweglich ist, welche zu einer Zuführrichtung (5) der Zuführeinrichtung (4) parallel ist.

3. Anlage nach einem der vorhergehenden Ansprüche, wobei der Roboter-Manipulator (9) mit zumindest zwei mit dem Roboter-Manipulator (9) durch die Zwischenschaltung von entsprechenden Stoßdämpfungseinrichtungen (29) verbundenen Schleifwerkzeugen (31) ausgestattet ist.

4. Anlage nach Anspruch 3, wobei der Roboter-Manipulator (9) für jedes Schleifwerkzeug (31) eine respektive Verriegelungseinrichtung (26) umfasst, um das Schleifwerkzeug (31) in einer Ruhestellung zu arretieren.

5. Anlage nach einem der vorhergehenden Ansprüche und ferner umfassend einen Reinigungsapparat (33) zum Reinigen der Schleifwerkzeuge (12, 31), der Reinigungsapparat (33) wiederum aufweisend eine Beherbergungskammer (34, 38), dazu eingerichtet das Schleifwerkzeug (12, 31) aufzunehmen und angeschlossen an einen pneumatischen Druckluftkreis (39) zum Reinigen der Schleifwerkzeuge (12, 31) von Verarbeitungsstaub, und an einen pneumatischen Saugkreis (40) zum Aufsaugen des durch die Betätigung des pneumatischen Druckluftkreises (39) aufgewirbelten Verarbeitungsstaubs.

6. Anlange nach einem der vorhergehenden Ansprüche und ferner umfassend eine Steuereinrichtung (41) zum Erkennen der Anwesenheit des Schleifwerkzeugs (12, 31) auf dem Roboter-Manipulator (9) und/oder der Höhe des Schleifwerkzeugs (12, 31).

7. Anlange nach einem der vorhergehenden Ansprüche und ferner umfassend zumindest zwei auf einer selben Seite und/oder einander gegenüberliegenden Seiten der Zuführeinrichtung (4) angeordnete Roboter-Manipulatoren (9).

## Revendications

1. Installation pour le ponçage/la finition d'éléments (2) faits de bois, de métal ou autre comprenant un poste de ponçage (3) ; un dispositif d'introduction (4) pour introduire au moins un élément (2) dans le poste de ponçage (3) d'une manière continue ; et un manipulateur robotique (9), qui est doté d'au moins un outil de ponçage (12 ; 31) et est configuré de façon à permettre à l'outil de ponçage (12 ; 31) de réaliser le ponçage de l'élément (2) d'une manière continue combinant les mouvements du dispositif d'introduction (4) aux mouvements du manipulateur robotique (9) ; et **caractérisée en ce que** le manipulateur robotique (9) comprend une pluralité de bras articulés (10), qui sont motorisés de façon à tourner les uns par rapport aux autres autour d'axes de rotation (11) respectifs, et au moins un dispositif amortisseur de chocs (13 ; 29), qui est interposé entre le bras articulé d'extrémité (10a) et l'outil de ponçage (12 ; 31) ; dans laquelle le dispositif amortisseur de chocs (13 ; 29) comprend au moins un vérin amortisseur de chocs pneumatique (22) comprenant, à son tour, un cylindre (19), qui est fixé au bras articulé d'extrémité (10a), et une tige de sortie (21), qui est fixée à l'outil de ponçage (12 ; 31), est en prise d'une manière glissante dans le cylindre (19), et est configurée de façon à définir, à l'intérieur du cylindre (19) lui-même, une première chambre à volume variable (23), qui est reliée à un dispositif pneumatique fournissant un gaz sous pression ; et dans laquelle le mouvement axial de la tige de sortie (21) le long du cylindre (19) est délimité, sur un côté, par une paroi inférieure du cylindre (19) et, sur l'autre côté, par un organe de butée de fin de course (25) situé à l'intérieur du cylindre (19) ; un dispositif de verrouillage (26) étant prévu pour verrouiller la tige de sortie (21), et par conséquent l'outil de ponçage (12 ; 31), dans une position de repos, dans laquelle le dispositif de verrouillage (26) comprend une deuxième chambre à volume variable (26), qui est définie entre la tige de sortie (21) et l'organe de butée de fin de course (25), et est reliée à un dispositif pneumatique fournissant un gaz sous pression.

2. Installation selon la revendication 1, dans laquelle le manipulateur robotique (9) est mobile dans une direction d'introduction (5) qui est parallèle à une direction d'introduction (5) du dispositif d'introduction (4).

3. Installation selon l'une quelconque des revendications précédentes, dans laquelle le manipulateur robotique (9) est doté d'au moins deux outils de ponçage (31) reliés au manipulateur robotique (9) au moyen de l'interposition de dispositifs amortisseurs de chocs (29) respectifs.

4. Installation selon la revendication 3, dans laquelle le manipulateur robotique (9) comprend, pour chaque outil de ponçage (31), un dispositif de verrouillage (26) respectif pour verrouiller l'outil de ponçage (31) dans une position de repos.

5. Installation selon l'une quelconque des revendications précédentes et comprenant en outre un appareil de nettoyage (33) pour nettoyer les outils de ponçage (12 ; 31); l'appareil de nettoyage (33) comprenant à son tour une chambre de logement (34, 38) configurée pour recevoir l'outil de ponçage (12 ; 31) et reliée à un circuit pneumatique à air comprimé (39) pour nettoyer les outils de ponçage (12 ; 31) afin d'enlever de la poussière de traitement, et à un circuit pneumatique d'aspiration (40) pour aspirer la poussière de traitement générée par l'action du circuit pneumatique à air comprimé (39).

6. Installation selon l'une quelconque des revendications précédentes et comprenant en outre un appareil de commande (41) pour détecter la présence de l'outil de ponçage (12 ; 31) sur le manipulateur robotique (9) et/ou la hauteur de l'outil de ponçage (12 ; 31) .

7. Installation selon l'une quelconque des revendications précédentes et comprenant en outre au moins deux manipulateurs robotiques (9) agencés au niveau d'un même côté et/ou sur des côtés opposés du dispositif d'introduction (4).
